# EUROPEAN PATENT APPLICATION

(11) **EP 1 363 095 A1**
(43) Date of publication of application: **19.11.2003**
(21) Application number: 02425307.2
(22) Date of filing: 16.05.2002
(51) Int. Cl.: F26B 15/18, B08B 9/20

(54) **An apparatus for drying bottles in a bottling plant**

(71) Applicant: Cames snc di Colla G. & Sardi G., 12058 S. Stefano Belbo (Cuneo) (IT)
(72) Inventor: Sardi, Giovanni, 14053 Canelli (AT) (IT); Colla, Giovanni, 12058 S. Stefano Belbo (CN) (IT)
(74) Representative: Robba, Pierpaolo

(57) **Abstract**

An apparatus (1) for drying bottles (2) comprises a conveyor line (10) for conveying the standing bottles (2) through means (40) adapted to dry the external surfaces of the bottles (2), while the bottles rotate about their axes. The conveyor line (10) comprises a single section extending from the entrance to the exit of the apparatus (1) and consists of a pair of belts (12, 13) advancing in opposite directions and at very different speeds.

## Description

The present invention refers to an apparatus for drying bottles, particularly of the type used in combination with a machine for washing bottles in a bottling plant.

The large bottling plants generally comprise a series of automated apparatuses performing the several operations of the bottling cycle, such as washing and drying the inside of the bottles, filling, corking or capping, washing and drying the bottle outside, labelling and packaging.

According to a known technique, after the washing step the drying of the bottle external surfaces is generally performed by advancing the standing bottles along a conveyor belt through streams of forced air directed around the bottle external surfaces.

The drying apparatuses must perform a complete drying of the whole external surface of the bottle, without leaving areas that are not completely dried at the end of the drying step, since moist areas could impair the success of the subsequent labelling step. Moreover, in large bottling plants, the drying apparatuses must ensure a high drying speed, to prevent undue delays in the bottling plant.

To meet such requirements, known drying apparatuses make the bottles rotate about their axes while the bottles are being conveyed, and use drying air delivery means which are downwards inclined in advancing direction of the bottles. Thanks to the combination of the belt translation motion with the bottle rotary motion and to the air stream arrangement, the air flow licks up the whole bottle surface starting from the cork down to the bottle base, thus producing a spiral drying effect.

An apparatus of that kind is disclosed in EP-A 1 028 300, upon which the preamble of claim 1 is based. Other apparatuses operating according to the same principle are disclosed in FR-A 2 444 908, FR-A 2 573 187, FR-A 2 660 583 and US-A 2 501 367.

The apparatus disclosed in EP-A 1 028 300 conveys the bottles on a pair of conveyor belts, adjacent and parallel to each other and advancing at different speeds, the belts supporting the bases of such bottles so that half base rests on one belt and half on the adjacent belt.

Given the bottle rotation speeds attainable in such manner, that arrangement ensures the complete drying of the bottles only with a relatively long path and hence relatively long drying times. To keep the longitudinal size of the apparatus limited, the conveyor line is then divided into two or more sections located either parallel or at an angle relative to each other, and adjacent sections move in different directions. This makes the apparatus complex and therefore expensive. Indeed, means are required to transfer the bottles from one section to the subsequent one, as well as possible additional conveyors to convey the bottles toward the apparatus exit, if the last line section moves towards the entrance. Further, a multiplication of the air delivery ducts is required, since such ducts must be associated with each section.

It is an object of the invention to improve the drying efficiency of an apparatus of the above kind, so that a complete drying can be obtained with reduced length paths, which can be obtained by a single section of the conveyor line. Thus, drying times are shorter and construction is simpler.

According to the invention, this is attained in that a first belt of the belt pair forming the conveyor line moves in the direction of conveyance of the bottles, and the other belt moves in opposite direction to the first one.

The first belt moves at much higher speed than the second belt, and the speed difference increases as the plant throughput (in terms of number of bottles conveyed in a given time) increases.

Thus, a bottle rotation speed is attained that is much higher than that attainable by the prior art, and the complete drying takes place during conveyance on a single line section, of which the length meets the requirements of limited longitudinal size of the apparatus.

The present invention will be disclosed in greater detail with reference to the attached drawings, in which:
- Figure 1 is a side view of an apparatus according to the invention, located past a station for washing the bottles;
- Figure 2 is a simplified side view of the apparatus shown in Figure 1;
- Figure 3 is a plan view of the conveyor line;
- Figure 4 is a sectional view along line A-A of Figure 2;
- Figure 5 in an enlarged view of the detail denoted by X in Figure 4; and
- Figure 6 is a plan view of an air duct.

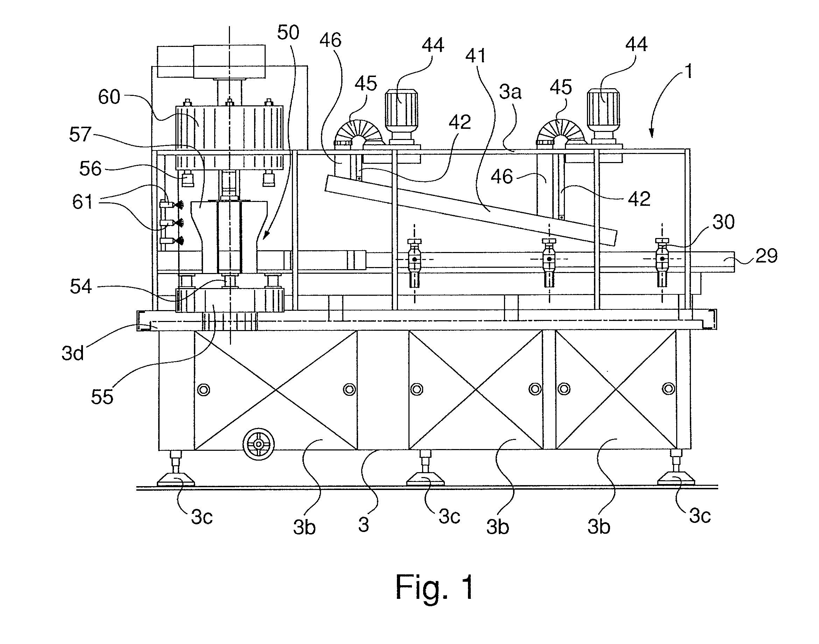

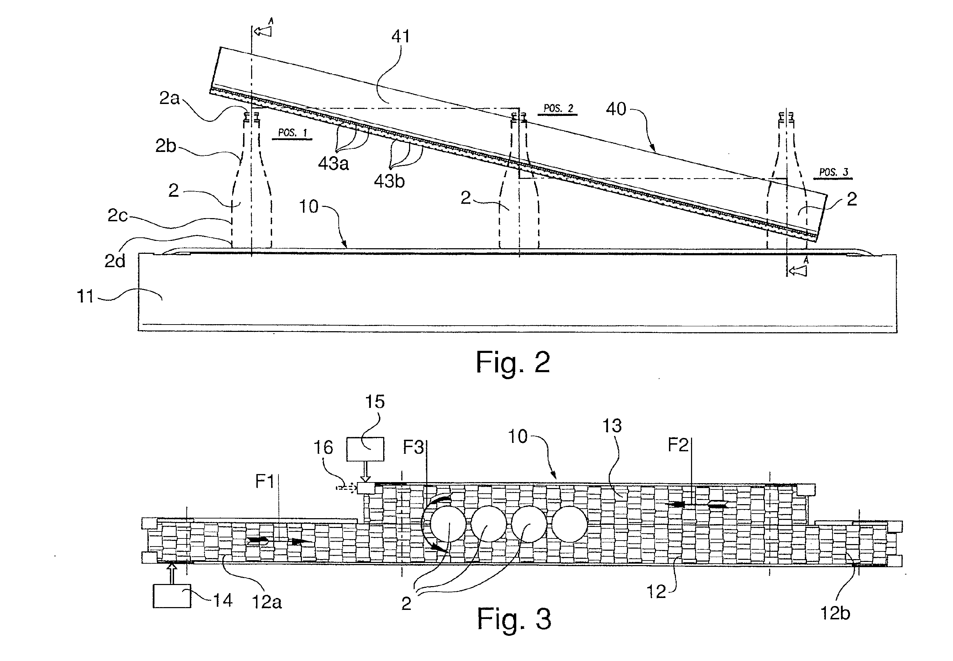

With reference to Figures 1 and 2, apparatus 1 for drying bottles according to the invention is disposed downstream a bottle washing station 50 and is integrated therewith.

Apparatus 1 and station 50 are mounted on a substantially parallelepiped base 3, constituted by a box-shaped frame 3d and provided with a roof 3a, detachable side walls 3b and a plurality of adjustable supporting feet 3c.

Apparatus 1 comprises a conveyor line 10 (Figure 2) guiding bottles 2 along drying means 40 capable of sending drying air streams towards the bottles.

Drying means 40 comprise a pair of ducts 41 for delivering drying air, which ducts are located alongside conveyor line 10. A pair of blowers 44 are further located on roof 3a of base 3 for producing a flow of forced air inside ducts 41. Each blower 44 is equipped, for each duct 41, with a hose 45 connected to a hub 46 secured to the duct. One hub 46 is mounted for instance near the upstream end of duct 41 and the other one is mounted in a central portion of the duct.

Blowers suitable to this aim are for instance blowers or compressors ELMO manufactured by Siemens AG.

Ducts 41 hang from roof 3a of base 3 through brackets 42, such that ducts 41 are tilted downwards, in a vertical plane, in the bottle advancing direction. Advantageously, brackets 42 have adjustable lengths, so that the positions of duct 41 can be adjusted in a vertical plane to suit bottles 2 with different sizes.

The air streams are obtained through a plurality of nozzles 43a, 43b provided along each duct 41 and oriented towards the bottles transit zone, so as to generate a laminar air flow that licks the external surface of bottle 2 with a desired inclination. The air streams are generated by at least two sets of holes or nozzles 43a, 43b, arranged in staggered relationship in at least two parallel rows along each duct 41.

The positions and the inclinations of ducts 41 along the conveyor line are such that the air streams arrive at the region of cork or cap 2a in the initial portion of ducts 41 (position 1 in Figure 2), at the intermediate region between neck 2b and body 2c of bottles 2 in the central portion of ducts 41 (position 2 in Figure 2), and at the region adjacent to bases 2d of bottles 2 in the end portion of ducts 41 (position 3 in Figure 2).

A guide 29, adjustable both in height and horizontally through corresponding handle grips 30, is located parallel to conveyor line 10 so as to keep bottles 2 in upright position during the translation along the conveyor line, in co-operation with the air streams coming from duct 41 on the opposite side of conveyor line 10.

To avoid interference with duct 41 located on the same side, guide 29 can stop in correspondence of the end portion (position 3) of that duct, if the latter ends at a level below guide 29. In such position, bottles 2 will be kept in upright position by the air streams only.

Washing station 50 is substantially as disclosed in EP-A 1 028 300, and therefore only the essential parts thereof have been shown.

The station essentially comprises a rotating circular carousel 55 with a plurality of rotating bases 54 intended each to receive a bottle 2. A brush 57, rotating in opposite direction with respect to rotating bases 54 and carousel 55, is mounted at the centre of the rotating carousel 55 for washing the external surfaces of bottles 2 through water jets from nozzles 61 laterally disposed with respect to rotating carousel 55.

Bottles 2 are blocked onto rotating bases 54, during washing, by pressing caps 56 located above carousel 55, in correspondence with control unit 60 of rotating carousel 55. Suitable devices (not shown) transfer the bottles to be washed to carousel 55 and the washed bottles to conveyor line 10 of apparatus 1.

Referring to Figure 3, conveyor line 10 comprises a pair of conveyor belts 12, 13, adjacent and parallel to each other, supporting the bases of bottles 2 with half a base resting on one belt and the other half base resting on the adjacent belt.

Conveyor belts 12, 13 move in opposite directions (as shown by arrows F1, F2) and at different speeds, the speed of belt 12 moving in the transfer direction of bottles 2 being of course higher. This way, during the advancing movement of the belts, a rotary motion around their axes is also imparted to bottles 2 (arrow F3).

Thanks to that rotary motion and to the duct inclination, while bottles 2 advance along conveyor line 10, a spiral drying effect is obtained, from top to down, that drags downward the film of water covering bottles 2 and ensures a complete drying of the whole external surfaces of bottles 2.

The speeds of belts 12 and 13 may be adjusted so as to impart to bottles 2 a desired advancing speed as well as a number of revolutions suitable to ensure a complete and fast drying of bottles 2. More particularly, the speed of belt 12 is much higher than that of belt 13 (e. g. 1,0 to 15,0 times higher), and the difference increases as the machine throughput (in terms of bottles per hour) increases.

Belts 12, 13 may be driven in opposite directions by a pair of separate electric motors 14, 15, as schematically shown in Figure 3. In this manner the maximum flexibility is obtained in adjusting the speeds of the belts in a wide speed range.

In the alternative, only fast belt 12 is driven by an own motor 14, whereas slow belt 13 may be driven by units 60 controlling the movements of the different parts of washing station 50, as shown by dotted-line arrow 16.

The driving mechanisms of the belts are wholly conventional and do not require a detailed description.

The highly different speeds and the displacement in opposite directions of the conveyor belts allow attaining a rotation speed of bottles 2 much higher than the speed attainable in the prior art apparatus, where the belts move in the same direction. Consequently, the length of the drying path can be greatly reduced and the conveyor line can be made of a single section, whereby the apparatus structure is greatly simplified. Tests performed by the Applicant have shown that, by a proper choice of the operating parameters, the length of the conveyor line can be reduced to a quarter of the length of the known apparatus.

Table I shows some examples of belt speeds that can be used for different throughputs of the apparatus and for two exemplary bottle diameters.

**TABLE I**

| Plant throughput (bottles/ hour) | Linear speed of belt 12 (m/min) | Linear speed of belt 13 (m/min) | (Linear speed of belt 13)-to-(Linear speed of belt 12) ratio | Rotation speed of the bottles | | Air duct lengths (mm) |
|---|---|---|---|---|---|---|
| 1000 | 9 | 4.50 | 1:2 | *φ* 80 | 10 rev/m | 1000 |
| | | | | φ 100 | 16 rev/m | |
| 2500 | 13.3 | 5.3 | 1:2.5 | φ 80 | 12 rev/m | 1000 |
| | | | | φ 100 | 18 rev/m | |
| 5000 | 24 | 8 | 1:3 | φ 80 | 16 rev/1.4 m | 1400 |
| | | | | φ 100 | 12 rev/1.4 m | |
| 12000 | 28 | 4 | 1:7 | φ 80 | 9.5 rev/1.6 m | 1600 |

It will be appreciated that rotation is faster for bottles of greater diameter, as it is desirable taking into account the greater surface to be dried.

The Figure still shows that belt 12 is longer than belt 13 and that the two belts are adjacent over a length substantially corresponding with the length of the horizontal projections of ducts 41. Initial portion 12a of belt 12 co-operates with the means delivering the bottles outgoing from washing station 50 (Figure 1), and end portion 12b co-operates with similar means transferring the dried bottles to a downstream station, more particularly to a labelling station, not shown.

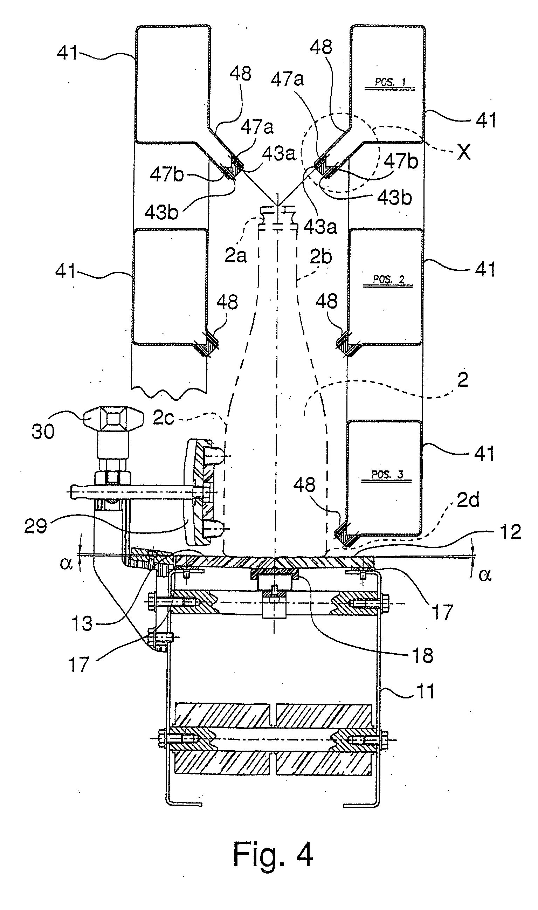

Turning to Figure 4, conveyor belts 12 and 13 are inclined towards the centre line of the conveyor line, so that the transversal cross section of the conveying surface on which the bottles 2 rest is substantially V-shaped.

By that arrangement, used also in EP-A 1 028 300, the constant rotation of bottles 2 around their axes is ensured and the distances between bottles 2 are kept constant during the drying step.

Conveyor belts 12 and 13 are preferably made of a mesh of a resistant and inextensible plastic material and they run over supports 11, preferably made of box-type stainless steel. Spacers 17 and 18 of a material having a low coefficient of friction are applied onto said supports for an easier sliding of the belts. Spacers 17 and 18 are such that belts 12 and 13 are inclined by an angle a, preferably in the range of about 1° to 5°.

The Figure also shows that nozzles 43a, 43b do not open directly into the body of the respective duct 41, but they are formed at the ends of respective cylindrical channels 47a, 47b provided in a spout 48. That spout extends along the whole lower corner of duct 41 and projects towards bottles 2. Channels 47a, 47b may have a length of the order of 1 cm or less, preferably about 0.8 cm.

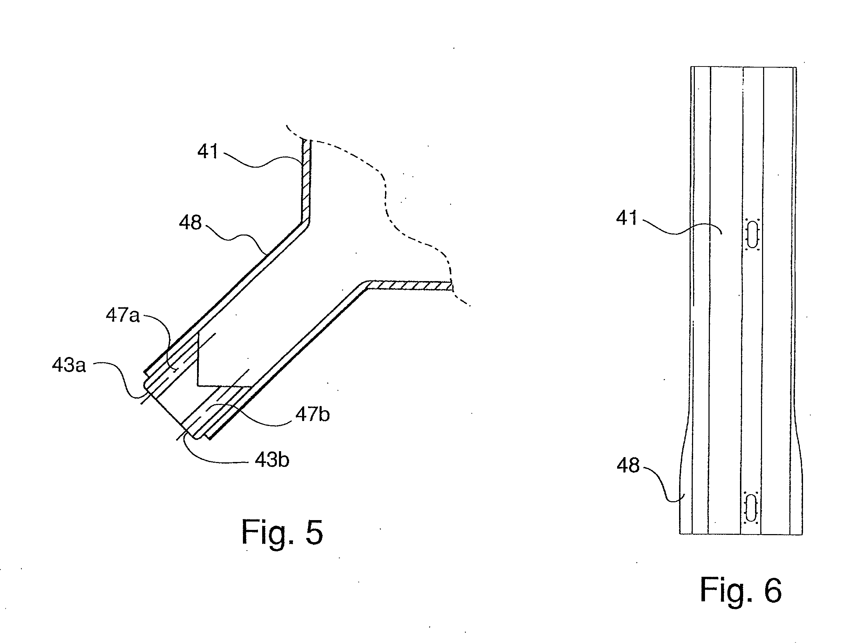

Spout 48, when seen in cross section, has a greater length in the initial zone of duct 41 (position 1), as shown also in Figure 6. Thus nozzles 43a, 43b are at the proper distance from the concerned regions of bottles 2 at any position along the bottle travel, and spacing apart ducts 41 in the area where the bottles leave the apparatus (position 3) is not required.

Moreover, by such an arrangement, the level adjustment of ducts 41 to adapt such level to different bottle kinds is made easier. It will be enough to have suitable marks on brackets 42.

Still further, as better shown in the enlarged cross-sectional view of Figure 5, channels 47a (and corresponding nozzles 43a) in the upper row have a smaller diameter than channels 47b (and nozzles 43b) in the lower row. For instance, the upper nozzles have a diameter of the order of 2.5 mm and the lower ones have a diameter of the order of 3 mm.

The guided propagation of the air streams towards nozzles 43a, 43b ensures a better drying than that attainable when the outlet nozzles directly open into duct 41. Also the provision of two rows of nozzles 43a, 43b of different diameters and of two blowers 44 contributes to a better drying efficiency.

The tests carried out by the Applicant have shown that, by such an arrangement, the complete drying can be attained by making the bottles travel along a path which is about half the path in the solution known from EP-A 1 028 300, where a single row of nozzles directly opening into duct 41 is used. That feature alone would already allow using a single-section conveyor line, with the already mentioned advantages.

It is clear that the above description is given only by way of non limiting example and that changes and modifications are possible without departing from the scope of the invention. Thus, for instance, even if belts moving at different speeds have been referred to, the two belts could move in opposite directions but at the same speed, so that a bottle would no longer advance while continuing rotating. That feature would allow an optimum drying, should the apparatus be associated with means for detecting the degree of bottle drying.

## Claims

1. An apparatus (1) for drying the external surfaces of bottles (2), comprising conveyor means (10) for conveying the bottles (2) along drying means (40) and for imparting the bottles a rotary motion about their axes, the conveyor means (10) comprising a pair of conveyor belts (12, 13) disposed adjacent and parallel to each other, on which the bases said bottles (2) rest so that half a base is supported by one belt (12) and the other half base is supported by the adjacent belt (13), **characterised in that** a first one (12) of said two belts moves in the direction of conveyance of the bottles (2) and the second belt (13) moves in opposite direction to the first one (12).

2. An apparatus (1) as claimed in claim 1, **characterised in that** said first belt (12) moves at much higher speed than the second belt (13).

3. An apparatus (1) as claimed in claim 2, **characterised in that** the speed difference between said belts (12, 13) increases as the throughput of the apparatus (1) increases.

4. An apparatus (1) as claimed in any preceding claim, **characterised in that** said two belts (12, 13) define a conveyor line (10) comprising a single section, extending from an entrance to an exit of the apparatus (1).

5. An apparatus (1) as claimed in claim 4, **characterised in that** said belts (12, 13) have different lengths, and said first belt (12) has an initial section (12a) and an end section (12b) where said second belt (13) is not present and where the first belt co-operates with means for delivering the bottles to be dried outgoing from a processing station (50) upstream the apparatus (1), and with means for transferring the dried bottles to a processing station located downstream the apparatus (1), respectively.

6. An apparatus (1) as claimed in any preceding claim, **characterised in that** said belts (12, 13) are driven by independent motors (14, 15).

7. An apparatus (1) as claimed in claim 5, **characterised in that** said first belt (12) is driven by an own motor (14), and said second belt (13) is driven by means (60) actuating equipment (54, 55) belonging to a washing station (50) forming said upstream processing station.

8. An apparatus (1) as claimed in any preceding claim, **characterised in that** said belts (12, 13) are inclined towards the centre line of the conveyor line (10) so as to define a carrying surface having a substantially V-shaped transversal cross section.
